(19) Europäisches Patentamt / European Patent Office / Office européen des brevets

(11) **EP 3 593 680 A1**

(12) **EUROPÄISCHE PATENTANMELDUNG**

(43) Veröffentlichungstag:
   **15.01.2020   Patentblatt 2020/03**

(21) Anmeldenummer: 18182807.0

(22) Anmeldetag: **10.07.2018**

(51) Int Cl.:
   *A47J 36/02* (2006.01)          *C09D 127/18* (2006.01)
   *C09D 179/08* (2006.01)        *C09D 181/06* (2006.01)
   *C08L 27/18* (2006.01)

(84) Benannte Vertragsstaaten:
   **AL AT BE BG CH CY CZ DE DK EE ES FI FR GB
   GR HR HU IE IS IT LI LT LU LV MC MK MT NL NO
   PL PT RO RS SE SI SK SM TR**
   Benannte Erstreckungsstaaten:
   **BA ME**
   Benannte Validierungsstaaten:
   **KH MA MD TN**

(71) Anmelder: **Industrielack AG
   8855 Wangen SZ (CH)**

(72) Erfinder:
   • **Brand, Jörg
     8855 Wangen (CH)**
   • **Geisel, Hans Georg
     8854 Siebnen (CH)**

(74) Vertreter: **Schmauder & Partner AG
   Patent- & Markenanwälte VSP
   Zwängiweg 7
   8038 Zürich (CH)**

(54) **ANTIHAFTBESCHICHTUNG**

(57)   Eine Antihaftbeschichtung für einen Artikel weist zumindest eine auf eine Oberfläche des Artikels angebrachte Haftvermittlerschicht (V) und eine über der Haftvermittlerschicht angeordneten Deckschicht (D) auf, wobei die Haftvermittlerschicht eine Trockenfilmschichtdicke von 5 bis 25 µm aufweist und wobei die Deckschicht eine Trockenfilmschichtdicke von 10 bis 65 µm aufweist. Zur Erlangung einer verbesserten Kombination von Antihaft-Effekt und Abriebbeständigkeit wird vorgeschlagen, dass die Deckschicht 95 bis 100 Gew.-% PTFE und gegebenenfalls bis zu 5 Gew.-% Pigmente bezogen auf den gesamten Feststoffgehalt der Deckschicht enthält und frei von schmelzverarbeitbaren Fluorpolymeren ist und das enthaltene PTFE zwischen 1 und 100 Gew.-% eines hochmolekularen modifizierten PTFE, welches < 1 Gew.-% Perfluorpropylvinylether (PPVE) als modifizierendes Co-Monomer enthält und durch Emulsionspolymerisation gewonnen wurde, enthält.

Fig. 1

**Beschreibung**

Technisches Gebiet

Die vorliegende Erfindung betrifft eine PTFE-Antihaftbeschichtung mit verbesserten Antihaft-Eigenschaften nach intensivem Abrieb, einen Gegenstand mit einer derartigen Antihaft-Beschichtung , ein Verfahren zu deren Herstellung sowie deren Verwendung bei der Herstellung von Koch-, Brat- und Küchengeräten oder anderen Anwendungen, bei denen ein Antihaft-Effekt und hohe Abriebbeständigkeit gefordert sind.

Stand der Technik

Organische Fluorpolymerbeschichtungen zeigen aufgrund ihrer geringen Oberflächenenergie sehr gute Antihaft-Eigenschaften und aufgrund der hohen C-F Bindungsenergien hohe Temperaturbeständigkeiten. Insbesondere als Antihaft-Beschichtungen für Küchengeräte finden solche Beschichtungen breite Anwendung.

Antihaft-Beschichtungen aus Fluorpolymeren werden meist in mehreren Schichten auf das Substrat aufgetragen. Mehrschichtige Fluorpolymerbeschichtungen umfassen generell eine Haftvermittler-Schicht und eine Deckschicht, und optional eine oder mehrere Mittelschichten.

Mehrlagige Antihaft-Beschichtungen aus Fluorpolymeren sind seit vielen Jahren bekannt. Die Haftvermittler-Schicht solcher Systeme besteht typischerweise aus einem oder mehreren hitzebeständigen organischen Bindeharzen und einem oder mehreren Fluorpolymeren zusammen mit verschiedenen Pigmenten und Füllstoffen. Die Mittelschicht beinhaltet hauptsächlich Fluorpolymere, geringe Anteile an Effektpigmenten, Pigmenten, Füllstoffen und Filmbildehilfsmitteln, wohingegen die Deckschicht fast ausschliesslich aus Fluorpolymeren, insbesondere aus hochmolekularem PTFE, welches durch Emulsionspolymerisation von TFE aus wässriger Dispersion gewonnen wurde, alleine oder aus hochmolekularem PTFE , welches durch Emulsionspolymerisation von TFE aus wässriger Dispersion gewonnen wurde, mit geringen Anteilen an schmelzverarbeitbarem Fluorpolymer, besteht, um möglichst gute Antihaft-Eigenschaften der Deckschicht zu gewährleisten.

Zur Verbesserung der Abriebfestigkeit mehrschichtiger PTFE-Antihaftbeschichtungen werden meist harte anorganische Füllstoffe verwendet.

So beschreibt z.B. US 5,250,356 ein mehrschichtiges System, umfassend eine durch feinteiliges Aluminiumoxid verstärkte Haftvermittler-Schicht bestehend aus PTFE, PFA und PAI, einer Zwischenschicht bestehend aus PTFE, PFA und feinteiligem Aluminiumoxid sowie einer Deckschicht aus reinem PTFE.

EP 1016466 beschreibt eine mehrschichtige keramisch verstärkte Antihaftbeschichtung, bei der die Basisschicht keramische Partikel enthält, die aber so gross sind, dass sie aus der Deckschicht herausragen und dadurch die abrasive Belastung von der Deckschicht fernhalten.

US 6,761,964 beschreibt eine mehrschichtige Antihaftbeschichtung umfassend eine Basisschicht aus Fluorpolymeren, Haftvermittler-Polymeren und grossen anorganischen Hartstoffpartikeln, die in der Basisschicht verankert sind und in die darauf folgende Zwischenschicht hineinragen, welche aus Fluorpolymeren und kleineren keramischen Füllstoffpartikeln besteht, und einer Deckschicht, die ausschliesslich aus Fluorpolymeren besteht.

EP 2001949 beschreibt eine dreischichtige Antihaftbeschichtung in der die Basisschicht und die Deckschicht frei von keramischen Partikeln >10 $\mu$m sind und die Mittelschicht mindestens 3Gew% keramische Partikel >10 $\mu$m und Fluorpolymere enthält.

Werden solche Systeme abgerieben, so zeigen diese Systeme auf den abgeriebenen Oberflächen meist schlechte Antihaft-Eigenschaften, da die Füllstofffreien Deckschichten aufgrund der niedrigen Deckschicht-Trockenfilmschichtdicken schnell abgerieben werden und somit die mit Füllstoffen versetzten Mittelschichten freigelegt werden, die schlechtere Antihaft-Eigenschaften zeigen, als die meist ausschliesslich aus Fluorpolymeren bestehenden Deckschichten.

EP 2342279 beschreibt eine Fluorpolymer-Beschichtungszusammensetzung mit verbesserter Abriebbeständigkeit, die auf eine mit Aluminiumoxid verstärkten Haftvermittler-Schicht oder zumindest eine Mittelschicht aufgebracht wird. Die beschriebene ungefüllte Deckschicht besteht aus Acrylaten (Filmbildehilfsmitteln), Cer-Ethylhexanoat (Katalysator für die Verbrennung des Filmbildehilfsmittels) und einer Fluorpolymer-Zusammmensetzung.

Die Fluorpolymerzusammensetzung besteht hierbei aus 30-96%Gew hochmolekularem PTFE (bezogen auf den gesamten festen Gehalt an Fluorpolymeren der Beschichtung) in Form einer wässrigen Dispersion mit einem zahlengemittelten Molekulargewicht (Mn) von mindestens 500'000, wobei das hochmolekulare PTFE ein modifizierendes Co-Monomer in einem Gehalt von weniger als 1% beinhaltet und die Fluorpolymerzusammensetzung ferner niedermolekulares PTFE in Form einer wässrigen Dispersion in einem Gehalt von 4-70%Gew (bezogen auf den gesamten festen Gehalt an Fluorpolymeren der Beschichtung) mit einem ersten Schmelzpunkt von 335 °C oder weniger und ein schmelzverarbeitbares Fluorpolymer in Form wässriger Dispersion enthält. Das offenbarte hochmolekulare PTFE und das erwähnte niedermolekulare PTFE werden hierbei durch Emulsionspolymerisation von TFE erhalten.

Die verbesserten Abriebwerte dieser Beschichtung werden auf das Vorhandensein von niedermolekularem PTFE und schmelzverarbeitbarem Fluorpolymer (z.B. PFA) zurückgeführt.

Für die Basisschicht wurden Schichtstärken um 8 $\mu$m und für die Deckschicht wurden Schichtstärken um 25 $\mu$m offenbart.

WO 2012/092414 beschreibt wässrige Dispersionen von nicht-schmelzverarbeitbaren Fluorpolymeren und Beschichtungen aus diesen Dispersionen. Die aus den beschriebenen PTFE-Dispersionen hergestellten Beschichtungen zeigen durch erhöhten Gehalt an nicht-ionischem Netzmittel und 1-10%Gew wasserlösliche Erdalkalimetallen oder 0.1-1% kolloidales Silica eine erhöhte kritische Schichtdicke bevor es zur Bildung von Rissen in der Schicht kommt (CCT; critical cracking thickness).

Mehrschichtige Antihaftbeschichtungen besitzen meist Gesamt-Trockenfilmschichtstärken von maximal 45 $\mu$m (Haftvermittlerschicht: 14-18 $\mu$m, Mittelschicht 12-14 $\mu$m, Deckschicht 10-13 $\mu$m). Ungefüllte wässrige PTFE-Beschichtungszusammensetzungen (der Deckschicht) zeigen meist kritische Trockenfilm-Schichtdicken von ca. 12-14 $\mu$m bevor sich Risse bilden.

Eine verbesserte Abriebbeständigkeit kann u.a. dadurch erreicht werden, dass die Trockenfilmschichtdicke der Mittelschicht und der Deckschicht erhöht wird. Ohne Zusatz von Füllstoffen bilden sich jedoch bei hohen Schichtstärken Risse nach dem Einbrennen der Beschichtung.

Die Bildung von Rissen bei hohen Mittel- und Deckschicht-Trockenfilmschichtdicken lassen sich durch den Zusatz von Füllstoffen minimieren bzw. es können höhere kritische Trockenfilm-Schichtdicken erzielt werden. Die zugesetzten Füllstoffe zeigen jedoch einen negativen Einfluss auf die Antihaft-Eigenschaften der abgeriebenen Beschichtung.

Der Zusatz von Filmbildehilfsmitteln wie Acrylaten kann die kritische Trockenfilmschichtstärke ebenfalls etwas erhöhen, jedoch verbrennen die zugesetzten Acrylate beim Einbrennvorgang der Beschichtung und es müssen Katalysatoren zugesetzt werden um eine möglichst vollständige Verbrennung der Acrylate zu erreichen. Unverbrannte Acrylatrückstände beeinflussen die Antihaft-Eigenschaften ebenfalls negativ.

Darstellung der Erfindung

Eine Aufgabe der Erfindung ist es demnach, eine verbesserte Antihaftbeschichtung bereitzustellen. Eine weitere Aufgabe der Erfindung besteht darin, ein Verfahren zum Aufbringen der erfindungsgemässen Antihaftbeschichtung anzugeben. Gelöst werden diese Aufgaben durch die im Anspruch 1 definierte Antihaftbeschichtung bzw. durch das im Anspruch 12 definierte Verfahren.

Die erfindungsgemässe Antihaftbeschichtung umfasst zumindest eine auf eine Oberfläche des Artikels angebrachte Haftvermittlerschicht und eine über der Haftvermittlerschicht angeordneten Deckschicht, wobei die Haftvermittlerschicht eine Trockenfilmschichtdicke von 5 bis 25 $\mu$m aufweist und wobei die Deckschicht eine Trockenfilmschichtdicke von 10 bis 65 $\mu$m aufweist. Die Deckschicht enthält 95 bis 100 Gew.-% PTFE und gegebenenfalls bis zu 5 Gew.-% Pigmente bezogen auf den gesamten Feststoffgehalt der Deckschicht und ist frei von schmelzverarbeitbaren Fluorpolymeren wobei das enthaltene PTFE zwischen 1 und 100 Gew.-% eines hochmolekularen modifizierten PTFE, welches < 1 Gew.-% Perfluorpropylvinylether (PPVE) als modifizierendes Co-Monomer enthält und durch Emulsionspolymerisation gewonnen wurde, enthält. Der etwaige Restanteil von bis zu 99 Gew.-% besteht im Wesentlichen aus unmodifiziertem hochmolekularem PTFE.

Die Herstellung von modifziertem PTFE mittels Suspensionspolymerisation ist grundsätzlich bekannt und wird insbesondere zur Bildung von körnigem PTFE mit besonders hohem Molekulargewicht eingesetzt.

Die Herstellung von wässrigen Dispersionen von modifiziertem hochmolekularem PTFE mittels Emulsionspolymerisation ist ebenfalls bekannt und liefert sehr feinteilige wässrige Dispersionen, die im Gegensatz zu modifizierten PTFE Pulvern, die mittels Suspensionspolymerisation gewonnen wurden, leichter in eine wässrige Beschichtungszusammensetzung eingearbeitet werden können und praktisch kein Absetzverhalten zeigen.

Durch die hohen rissfreien Deckschicht-Trockenfilmschichtstärken lassen sich gegenüber dem Stand der Technik deutlich bessere Abriebfestigkeiten erzielen und die Antihaft-Eigenschaften der abgeriebenen Schicht sind deutlich langlebiger, da in der Deckschicht neben PTFE keine Füllstoffe enthalten sind, die nach dem Abrieb der Deckschicht freigelegt werden können und somit die Antihafteigenschaften verschlechtern würden. Dementsprechend zeichnet sich die erfindungsgemässe Antihaftbeschichtung durch einen guten Antihaft-Effekt in Kombination mit einer guten Abriebbeständigkeit aus.

Beim erfindungsgemässen Verfahren wird die zu bildende Haftvermittlerschicht in flüssiger Form als wässrige Dispersion auf die Oberfläche des Gegenstandes aufgebracht und anschliessend für 5 bis 15 Minuten bei 60 bis 110°C getrocknet. Danach wird die Deckschicht in Form einer wässrigen Dispersion auf die vorgetrocknete Haftvermittlerschicht aufgebracht und anschliessend werden die Schichten durch Trocknung und Versinterung bzw. Aufschmelzen bei 410 bis 430°C miteinander und mit der Oberfläche des Gegenstandes verbunden.

Überraschenderweise hat sich gezeigt, dass sich mit dem erfindungsgemässen Verfahren selbst hohe Deckschicht-Trockenfilmschichtstärken von bis zu 65 μm rissfrei in einem einzigen Beschichtungsvorgang erhalten lassen.

Ein weiterer Aspekt der Erfindung betrifft gemäss Anspruch 10 die Verwendung der erfindungsgemässen Antihaftbeschichtung für Oberflächenanwendungen, bei denen hohe Abriebfestigkeiten und gute Antihafteigenschaften gefordert werden.

Noch ein weiterer Aspekt der Erfindung betrifft gemäss Anspruch 11 einen Artikel, insbesondere ein Kochgeschirr oder anderer Haushalts- und Gebrauchsgegenstand, mit einer Oberfläche, die mit einer erfindungsgemässen Antihaftbeschichtung versehen ist.

Die erfindungsgemässe Antihaftbeschichtung weist demnach eine Schichtenfolge "Gegenstand-Haftvermittlerschicht-Deckschicht" auf. Optional kann zwischen der Haftvermittlerschicht und der Deckschicht eine Zwischenschicht aufgetragen werden.

Vorteilhafte Ausgestaltungen der Erfindung sind nachfolgend beschrieben und in den abhängigen Ansprüchen definiert.

Gemäss einer bevorzugten Ausgestaltung (Anspruch 2) weist die Deckschicht eine Trokkenfilmschichtdicke von 35 bis 40 μm auf.

Gemäss einer weiteren vorteilhaften Ausgestaltung (Anspruch 3) beträgt der Gehalt von PTFE in der Deckschicht 99 bis 99.5 Gew.-%. Der Gehalt an Pigmenten beträgt dementsprechend 1 bis 0.5 Gew.-% und setzt sich beispielsweise aus ungefähr 2 Teilen Effektpigmenten (Glimmer) und und ungefähr 1 Teil Russpigment zusammen.

In gewissen Ausführungsformen macht der Anteil des hochmolekularen modifizierten PTFE in der Deckschicht bis zu 99 Gew.-%, insbesondere bis zu 95 Gew.-%, insbesondere bis zu 75 Gew.-% aus. Insbesondere ist es vorteilhaft (Anspruch 4), wenn der Anteil des hochmolekularen modifizierten PTFE in der Deckschicht 2 bis 50 Gew.-%, vorzugsweise 4 bis 6 Gew.-%, insbesondere ungefähr 5.5 Gew.-% des gesamten PTFE in der Deckschicht ausmacht.

Vorteilhaft ist es überdies (Anspruch 5), dass das hochmolekulare modifizierte PTFE eine mittlere Teilchengrösse von ca. 200 nm (nach DIN ISO 13321), insbesondere ungefähr 150 bis 250 μm besitzt.

Gemäss einer vorteilhaften Ausgestaltung (Anspruch 6) ist die Deckschicht frei von Acrylaten. Unverbrannte Acrylatrückstände beeinflussen die Antihaft-Eigenschaften negativ und sind demnach unerwünscht.

Die Beschaffenheit geeigneter Haftvermittlerschichten ist an sich bekannt. Im vorliegenden Zusammenhang hat es sich als vorteilhaft erwiesen (Anspruch 7), dass die Haftvermittlerschicht im Wesentlichen aus hochtemperaturbeständigen Bindeharzen, Fluorpolymeren, Pigmenten und Füllstoffen besteht.

Grundsätzlich können die Bindeharze aus einer ganzen Reihe von bekannten Substanzen wie insbesondere PES (Polyethersulfone), PAI (Polyamidimide), PEK (Polyetherketon), PEEK (Polyetheretherketon), PPS (Polyphenylensulfide), PI (Polyimide), LCP (liquid crystal polymers) und Silikonharze oder Mischungen davon ausgewählt werden. Gemäss einer vorteilhaften Ausgestaltung (Anspruch 8) sind die Bindeharze aus der aus PES und PAI bestehenden Gruppe ausgewählt.

Bevorzugt ist es überdies (Anspruch 9), dass die Haftvermittlerschicht eine Trockenfilmschichtdicke von 10 bis 18 μm aufweist.

Kurze Beschreibung der Figuren

Ausführungsbeispiele der Erfindung werden nachfolgend anhand der Zeichnungen näher beschrieben, dabei zeigen:

Fig. 1        einen Schichtaufbau einer erfindungsgemässen Antihaftbeschichtung, als schematische Schnittdarstellung;

Fig. 2 - 5    ein Ausführungsbeispiel, jeweils nach einer bestimmten Abriebzeit (links) sowie nach zusätzlichem Milchtest und anschliessender Reinigung (rechts), nämlich: Abriebzeit 45 min (Fig. 2), 90 min (Fig. 3), 180 min (Fig. 4) und 270 min (Fig. 5);

Fig. 6 - 8    ein Vergleichsbeispiel, jeweils nach einer bestimmten Abriebzeit (links) sowie nach zusätzlichem Milchtest und anschliessender Reinigung (rechts), nämlich: Abriebzeit 45 min (Fig. 6), 90 min (Fig. 7) und 135 min (Fig. 8).

Wege zur Ausführung der Erfindung

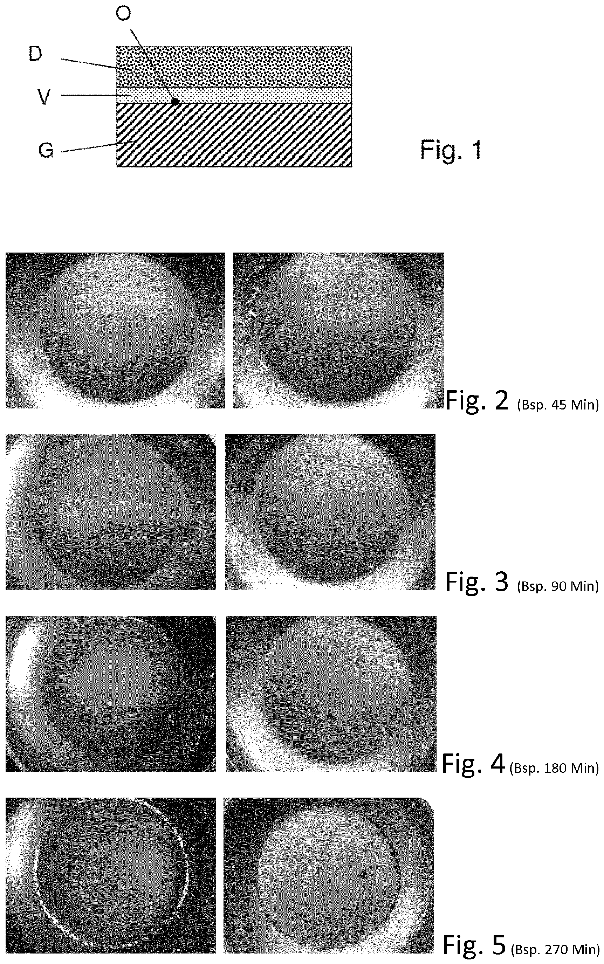

Die in der Figur 1 dargestellte Antihaftbeschichtung für einen Artikel G, bei dem es sich beispielsweise um ein Kochgeschirr, insbesondere um eine Bratpfanne handelt, weist eine auf einer Oberfläche O des Artikels angebrachte Haftvermittlerschicht V sowie eine über der Haftvermittlerschicht angeordnete Deckschicht D auf.

*Beispiel*

Geprüft wurde eine Antihaftbeschichtung bestehend aus einer Deckschicht mit einer Trockenfilmschichtstärke von 35 bis 40 µm und einer Basisschicht mit einer Trockenfilmschichtstärke von ca.15 µm. Die Deckschicht enthält in diesem Ausführungsbeispiel ca. 99.3%Gew PTFE bezogen auf den gesamten Feststoffgehalt der Deckschicht, davon sind ca. 5.5%Gew hochmolekulares modifiziertes PTFE, welches < 1 Gew.-% Perfluorpropy-Ivinylether (PPVE) als modifizierendes Co-Monomer enthält und durch Emulsionspolymerisation gewonnen wurde und eine mittlere Teilchengrösse von ca. 200 nm hat. Zusätzlich sind ca. 0.4%Gew Effektpigmente (Glimmer) und ca. 0.2%Gew Russpigment bezogen auf den gesamten Feststoffgehalt der Deckschicht enthalten.

Die Haftvermittlerschicht besteht im Ausführungsbeispiel aus ca. 32.5%Gew Aluminiumoxid, 18.4%Gew Polyamidimid, 13.7%Gew Siliciumcarbid, 27.1%Gew PTFE, 5.5%Gew PFA, 1.9%Gew kolloidalem Siliciumdioxid und 0.9%Gew Russpigment bezogen auf den gesamten Feststoffgehalt der Haftvermittlerschicht. Die Haftvermittlerschicht wird aus wässriger Dispersion auf ein sandgestrahltes Substrat (z.B. eine Bratpfanne) aufgebracht und anschliessend während 5 Min bei 100 °C vorgetrocknet. Danach wird die Deckschicht aus wässriger Dispersion auf die vorgetrocknete Haftvermittlerschicht aufgebracht und während 10 min bei 420 °C eingebrannt.

*Eigenschaften der Beschichtung:*

Die eingebrannte erfindungsgemässe Deckschicht wurde mit 40-facher Vergrösserung mit einem Stereomikroskop auf Risse hin untersucht. Dabei konnte verifiziert werden, dass die Deckschicht rissfrei war.

Die Abriebbeständigkeit des beschichteten Gegenstandes wurde wie folgt geprüft:
Die beschichtete Pfanne wird mit einer Mischung bestehend aus Edelstahlkugeln ø 4 mm, Korund (ALODUR EK- P20) und Wasser befüllt und auf einem Kreisschüttler KS 501 digital (Schüttelhub: 30 mm) befestigt und eine bestimmte Zeit bei 300 Umdrehungen/Minute geschüttelt. Die verwendeten Mengen an Edelstahlkugeln, Korund und Wasser berechnen sich wie folgt:

Der Durchmesser des Pfannenbodens innen wird ausgemessen und der ermittelte Wert in cm mit dem Faktor 0.394 multipliziert. Als Ergebnis erhält man den Pfannenbodendurchmesser innen in Zoll.

$$f = (\text{Pfannenbodendurchmesser innen Zoll})^2/10$$

Mit Hilfe des Faktors *f* wird eine entsprechende Menge an Edelstahlkugeln, Korund und Wasser berechnet:

| | |
|---|---|
| Edelstahlkugeln ø 4 mm | 175 Gramm · *f* |
| ALODUR EK- P20 | 18 Gramm · *f* |
| Wasser | 20 Gramm · *f* |

Nach einer bestimmten Schüttelzeit wird die Pfanne optisch dahingehend beurteilt, ob das Aluminiumsubstrat zu sehen ist. Anschliessend die abgeriebene Pfanne auf 200 ± 5 °C erhitzt und ein Pfannkuchen bestehend aus 400 g Milch (3.0% - 4.0% Fett), 200 g Weizenmehl, 150 g Eier, 4 g Salz gebacken und beurteilt, wie sich der gebackene Pfannkuchen aus der Pfannne entfernen lässt.

Um die Antihaft-Eigenschaften weiter zu überprüfen wurde anschliessend Milch eingebrannt, bis diese eine braunschwarze Farbe zeigt und zu rauchen beginnt. Die eingebrannte Milch wurde dann mit Hilfe eines Wasserstrahls aus der Pfanne entfernt und beurteilt, ob Rückstände der eingebrannten Milch in der Pfanne verbleiben. Die Ergebnisse wurden für verschiedene Abriebzeiten fotografisch festgehalten.

Die Figuren 2 bis 5 zeigen die erhaltenen Ergebnisse des mit der erfindungsgemässen Antihaftbeschichtung versehenen Gegenstandes.

Tabelle 1 zeigt die Ergebnisse des Pfannkuchentests des erfindungsgemässen Gegenstandes nach Abrieb und des Vergleichsbeispiels nach Abrieb.

*Vergleichsbeispiel*

Das Vergleichsbeispiel ist eine dreischichtige Antihaftbeschichtung, bei der die Haftvermittlerschicht eine Trockenfilmschichtstärke von ca. 18 µm aufweist, die Zwischenschicht eine Trockenfilmschichtstärke von ca. 15 µm aufweist und die Deckschicht eine Schichtstärke von ca. 12 µm aufweist.

Die Haftvermittlerschicht des Vergleichsbeispiels besteht aus ca. 29.9%Gew Aluminiumoxid, 24.5%Gew Polyamidimid, 12.7%Gew Siliciumcarbid, 25.2%Gew PTFE, 5.1%Gew PFA, 1.8%Gew kolloidalem Siliciumdioxid und 0.8%Gew Russpigment bezogen auf den gesamten Feststoffgehalt der Haftvermittlerschicht.

Die Zwischenschicht des Vergleichsbeispiels besteht aus ca. 5.2%Gew Acrylat, 0.1%Gew Cer-Ethylhexanoat, 2.0%Gew Aluminiumoxid, 12.3%Gew Siliciumcarbid, 76.7%Gew PTFE, 1.4%Gew PFA, 1.9%Gew Effektpigment (Glimmer) und 0.4%Gew Russpigment bezogen auf den gesamten Feststoffgehalt der Zwischenschicht.

Die Deckschicht des Vergleichsbeispiels besteht aus ca. 3.9%Gew Acrylat, 0.1%Gew Cer-Ethylhexanoat, 2.2%Gew Aluminiumoxid, 91.4%Gew PTFE, 2.2%Gew Effektpigment (Glimmer) und 0.2%Gew Russpigment bezogen auf den gesamten Feststoffgehalt der Deckschicht.

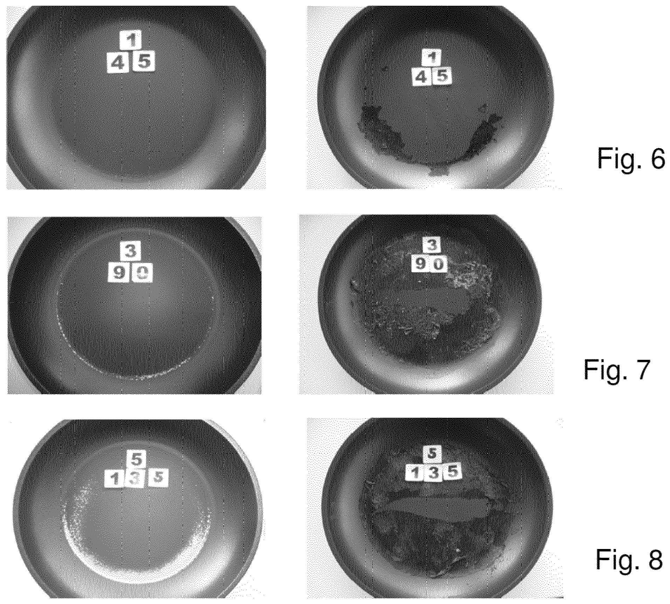

Die Figuren 6 bis 8 zeigen die Prüfungsergebnisse des Vergleichsbeispiels.

**Tabelle** 1: Ergebnisse des Pfannkuchentests des erfindungsgemässen Beispiels und des Vergleichsbeispiels, jeweils nach Abrieb.

| Abriebzeit | Erfindungsgemässes Beispiel | Vergleichsbeispiel |
|---|---|---|
| 45 Minuten | Pfannkuchen fällt nach Umdrehen der Pfanne heraus | Pfannkuchen fällt nach Umdrehen der Pfanne heraus |
| 90 Minuten | Pfannkuchen fällt nach Umdrehen der Pfanne heraus | Pfannkuchen fällt nach Umdrehen der Pfanne und klopfen heraus |
| 135 Minuten | Pfannkuchen fällt nach Umdrehen der Pfanne heraus | Pfannkuchen fällt nach Umdrehen der Pfanne und Klopfen heraus |
| 180 Minuten | Pfannkuchen fällt nach Umdrehen der Pfanne heraus | nicht durchgeführt |
| 270 Minuten | Pfannkuchen fällt nach Umdrehen der Pfanne heraus | nicht durchgeführt |

**Patentansprüche**

1. Antihaftbeschichtung für einen Artikel, wobei die Antihaftbeschichtung zumindest eine auf eine Oberfläche des Artikels angebrachte Haftvermittlerschicht (V) und eine über der Haftvermittlerschicht angeordneten Deckschicht (D) aufweist, wobei die Haftvermittlerschicht eine Trockenfilmschichtdicke von 5 bis 25 $\mu$m aufweist, und wobei die Deckschicht eine Trockenfilmschichtdicke von 10 bis 65 $\mu$m aufweist, **dadurch gekennzeichnet, dass** die Deckschicht 95 bis 100 Gew.-% PTFE und gegebenenfalls bis zu 5 Gew.-% Pigmente bezogen auf den gesamten Feststoffgehalt der Deckschicht enthält und frei von schmelzverarbeitbaren Fluorpolymeren ist, und das enthaltene PTFE zwischen 1 und 100 Gew.-% eines hochmolekularen modifizierten PTFE, welches < 1 Gew.-% Perfluorpropylvinylether (PPVE) als modifizierendes Co-Monomer enthält und durch Emulsionspolymerisation gewonnen wurde, enthält.

2. Antihaftbeschichtung nach Anspruch 1, **dadurch gekennzeichnet, dass** die Deckschicht eine Trockenfilmschichtdicke von 30 bis 42 $\mu$m aufweist.

3. Antihaftbeschichtung nach Anspruch 1 oder 2, **dadurch gekennzeichnet, dass** der Gehalt von PTFE in der Deckschicht 99 bis 99.5 Gew.-% beträgt.

4. Antihaftbeschichtung nach einem der Ansprüche 1 bis 3, **dadurch gekennzeichnet, dass** der Anteil des hochmolekularen modifizierten PTFE in der Deckschicht 2 bis 50 Gew.-%, vorzugsweise 4 bis 6 Gew.-%, insbesondere ungefähr 5.5 Gew.-% des gesamten PTFE in der Deckschicht ausmacht.

5. Antihaftbeschichtung nach einem der Ansprüche 1 bis 4, **dadurch gekennzeichnet, dass** das hochmolekulare modifizierte PTFE eine mittlere Teilchengrösse von 150 bis 250 nm, insbesondere von ungefähr 200 nm, besitzt.

6. Antihaftbeschichtung nach einem der Ansprüche 1 bis 5, **dadurch gekennzeichnet, dass** die Deckschicht frei von Acrylaten ist.

7. Antihaftbeschichtung nach einem der Ansprüche 1 bis 6, **dadurch gekennzeichnet, dass** die Haftvermittlerschicht im Wesentlichen aus hochtemperaturbeständigen Bindeharzen, Fluorpolymeren, Pigmenten und Füllstoffen besteht.

8. Antihaftbeschichtung nach Anspruch 7, **dadurch gekennzeichnet, dass** die Bindeharze aus der aus PES (Polyethersulfonen) und PAI (Polyamidimiden) bestehenden Gruppe ausgewählt sind.

9. Antihaftbeschichtung nach einem der Ansprüche 1 bis 8, **dadurch gekennzeichnet, dass** die Haftvermittlerschicht eine Trockenfilmschichtdicke von 10 bis 18 $\mu$m aufweist.

10. Verwendung einer Antihaftbeschichtung nach einem der Ansprüche 1 bis 9 für Oberflächenanwendungen, bei denen hohe Abriebfestigkeiten und gute Antihafteigenschaften gefordert werden.

11. Artikel, insbesondere Kochgeschirr oder anderer Haushalts- und Gebrauchsgegenstand, mit einer Oberfläche, welche mit einer Antihaftbeschichtung nach einem der Ansprüche 1 bis 9 versehen ist.

12. Verfahren zum Aufbringen einer Antihaftbeschichtung nach einem der Ansprüche 1 bis 9, **dadurch gekennzeichnet, dass** die zu bildende Haftvermittlerschicht in flüssiger Form als wässrige Dispersion auf die Oberfläche des Gegenstandes aufgebracht und anschliessend für 5 bis 15 Minuten bei 60 bis 110°C getrocknet wird, und dass anschliessend die Deckschicht in Form einer wässrigen Dispersion auf die vorgetrocknete Haftvermittlerschicht aufgebracht wird und die Schichten durch anschliessende Trocknung und Versinterung bzw. Aufschmelzen bei 410 bis 430°C miteinander und mit der Oberfläche des Gegenstandes verbunden werden.

Fig. 1

Fig. 2 (Bsp. 45 Min)

Fig. 3 (Bsp. 90 Min)

Fig. 4 (Bsp. 180 Min)

Fig. 5 (Bsp. 270 Min)

Fig. 6

Fig. 7

Fig. 8

Europäisches
Patentamt

European
Patent Office

Office européen
des brevets

# EUROPÄISCHER RECHERCHENBERICHT

Nummer der Anmeldung

EP 18 18 2807

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | EP 3 357 587 A1 (IND AG [CH]) 8. August 2018 (2018-08-08) * Ansprüche 1-12 * ----- | 1-11 | INV. A47J36/02 C09D127/18 C09D179/08 C09D181/06 |
| X | WO 2010/036911 A1 (WHITFORD CORP [US]; HARVEY LEONARD W [US]; LEECH LAWRENCE D [US]) 1. April 2010 (2010-04-01) | 1-3,5-12 | |
| A | * Absatz [0125] - Absatz [0138] * * Tabellen 3-6 * & EP 2 342 279 B2 (WHITFORD CORP [US]) 13. Juli 2011 (2011-07-13) ----- | 4 | ADD. C08L27/18 |
| A | Daikin Industries: "POLYFLON PTFE D-310", Technical information, 27. Oktober 2015 (2015-10-27), XP055506916, Gefunden im Internet: URL:https://www.daikinchem.de/downloads/Polyflon_PTFE_Dispersions/Technical_Data_Sheet_POLYFLON_PTFE_D-310_(2015).pdf [gefunden am 2018-09-13] * das ganze Dokument * ----- | 1-5 | |

RECHERCHIERTE
SACHGEBIETE (IPC)

A47J
C09D
C08L

Der vorliegende Recherchenbericht wurde für alle Patentansprüche erstellt

| Recherchenort | Abschlußdatum der Recherche | Prüfer |
|---|---|---|
| Den Haag | 13. September 2018 | Rodríguez, Luis |

**ANHANG ZUM EUROPÄISCHEN RECHERCHENBERICHT**
**ÜBER DIE EUROPÄISCHE PATENTANMELDUNG NR.**

EP 18 18 2807

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-09-2018

| Im Recherchenbericht angeführtes Patentdokument | Datum der Veröffentlichung | Mitglied(er) der Patentfamilie | Datum der Veröffentlichung |
|---|---|---|---|
| EP 3357587 A1 | 08-08-2018 | KEINE | |
| WO 2010036911 A1 | 01-04-2010 | AR 073682 A1 | 24-11-2010 |
| | | CA 2737585 A1 | 01-04-2010 |
| | | CN 102216383 A | 12-10-2011 |
| | | DK 2342279 T3 | 08-10-2012 |
| | | EP 2342279 A1 | 13-07-2011 |
| | | EP 2508565 A1 | 10-10-2012 |
| | | EP 2743309 A2 | 18-06-2014 |
| | | ES 2391444 T3 | 26-11-2012 |
| | | ES 2454015 T3 | 09-04-2014 |
| | | JP 5988180 B2 | 07-09-2016 |
| | | JP 6037195 B2 | 07-12-2016 |
| | | JP 2012504176 A | 16-02-2012 |
| | | JP 2015096622 A | 21-05-2015 |
| | | KR 20110066191 A | 16-06-2011 |
| | | PT 2342279 E | 18-10-2012 |
| | | TW 201016800 A | 01-05-2010 |
| | | US 2010080955 A1 | 01-04-2010 |
| | | US 2012165458 A1 | 28-06-2012 |
| | | WO 2010036911 A1 | 01-04-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5250356 A
- EP 1016466 A
- US 6761964 B
- EP 2001949 A
- EP 2342279 A
- WO 2012092414 A